# EUROPEAN PATENT APPLICATION

(11) **EP 4 159 437 A1**
(43) Date of publication of application: **05.04.2023**
(21) Application number: 21812057.4
(22) Date of filing: 26.02.2021
(51) Int. Cl.: B32B 27/18, B32B 27/32, C08J 3/22, C08K 5/103, C08L 23/02, C08L 23/08, C08J 5/18

(54) **MASTER BATCH, RESIN COMPOSITION, POLYOLEFIN RESIN FILM AND PRODUCTION METHOD THEREFOR, AND LAMINATE FILM**

(30) Priority: 28.05.2020 JP 2020093626
(71) Applicant: Takemoto Yushi Kabushiki Kaisha, Gamagori-shi, Aichi 443-8611 (JP)
(72) Inventor: SATO Shumma, Gamagori-shi, Aichi 443-8611 (JP)
(74) Representative: TBK
(86) International application number: PCT/JP2021/007550
(87) International publication number: WO 2021/240932

(57) **Abstract**

The masterbatch includes a non-modified polyolefin resin, an ethylene vinyl acetate copolymer, and an antifogging agent, the ethylene vinyl acetate copolymer is a copolymer having a structural unit derived from vinyl acetate in an amount from 5% to 30% by mol, the antifogging agent is a fatty acid ester formed from a fatty acid and a polyhydric alcohol, and a content of the ethylene vinyl acetate copolymer is in a range from 7 to 75 parts by mass based on 100 parts by mass of the non-modified polyolefin resin.

## Description

### TECHNICAL FIELD

The present invention relates to a polyolefin-based resin film excellent in transparency and an antifogging property, a method of producing the same, a masterbatch suitable as a raw material for producing the same, a resin composition, and a laminated film.

### BACKGROUND ART

Conventionally, polyolefin-based resin films have been widely used as, for example, packaging materials. Since a polyolefin resin has a hydrophobic property, when the resin is used to form a molded article, there is a tendency that the molded article has insufficient transparency. Therefore, a resin composition whose transparency is improved by adding a modifier to a polyolefin resin is used as a molding material. As such modifiers, for example, Patent Literature 1 discloses a polyglycerin fatty acid ester, Patent Literature 2 discloses a monoester of glycerin and a Cs to C₂₂ fatty acid, a monoester of diglycerin and a Cs to C₂₂ fatty acid, a polyoxyethylene alkylamino ether, and a mixture of monoesters or mono- or di-esters of polyoxyethylene alkylamino ether and a Cs to C₂₂ fatty acid, and Patent Literature 3 discloses an ester of glycerin and a fatty acid, an ester of polyglycerin and a fatty acid, and a mixture of diglycerin and a fatty acid. Patent Literature 4 discloses a glycerin fatty acid ester, a polyglycerin fatty acid ester, sorbitan fatty acid ester, a polyoxyethylene alkyl ether, a polyoxyethylene sorbitan fatty acid ester, a polyoxyethylene glycerin fatty acid ester, and the like as antifogging agents to be contained in a masterbatch for use in formation of a food packaging film or sheet. Further, Patent Literature 5 discloses a film composed of an unstretched layer (S layer) containing an ethylene-based polymer and antifogging agents (A), (B), and (C), or a film having an unstretched layer (S layer) containing the ethylene-based polymer and the antifogging agents (A), (B), and (C) as at least one surface layer, in which the ethylene-based polymer has a melting point of 60°C or higher and 130°C or lower, the antifogging agent (A) is a glycerin saturated fatty acid ester having a melting point of 40°C or higher, the antifogging agent (B) is a glycerin fatty acid ester that is liquid at a temperature of lower than 40°C, the antifogging agent (C) is an ethylene oxide adduct having an oleophilic hydrophilic balance (HLB) of 9.0 or higher, and a mass ratio of the antifogging agent (A) to a total mass of the antifogging agents (A), (B), and (C) is 5% or more and less than 60%.

A resin film has been studied in order to satisfactorily solve a problem that, when an article having a water-containing property or having moisture attached to a surface thereof, such as a vegetable, is packaged using a transparent resin film and stored in a low temperature atmosphere, dew condensation occurs on an inner surface of the film, so that fogging due to water droplets occurs, and the packaged article cannot be clearly visually recognized.

### PRIOR ART LITERATURE

### PATENT LITERATURE

Patent Literature 1: JP-A H5-96694
Patent Literature 2: JP-A 2006-231899
Patent Literature 3: JP-A 2017-179350
Patent Literature 4: JP-A 2018-127533
Patent Literature 5: JP-A 2018-193503

### SUMMARY OF INVENTION

### TECHNICAL PROBLEMS

When a film containing an antifogging agent is produced, there is a method of subjecting a masterbatch containing an antifogging agent to a film molding as it is, as described in Patent Literature 4. In addition, there is also a production method using plural kinds of masterbatches, for example, a production method using a masterbatch containing an antifogging agent at a high concentration and another masterbatch not containing an antifogging agent in combination. An object of the present invention is to provide a masterbatch and a resin composition which are suitable for these film production methods and lead to a polyolefin-based resin film excellent in transparency and an antifogging property. Another object of the present invention is to provide a method of producing a polyolefin-based resin film in which occurrence of extrusion variation during film formation is suppressed in a film molding by extrusion. Still another object of the present invention is to provide a laminated film which includes a resin layer (hereinafter, referred to as a "first resin layer") formed of the above polyolefin-based resin film and is excellent in transparency and an antifogging property. In the present specification, the term "antifogging property" refers to performance in which, after an article having a water-containing property or having moisture attached to a surface thereof is placed and left in an atmosphere at, for example, 10°C or lower in a state of being packaged with a resin film (in the case of a laminated film, in a state in which the first resin layer is located on an article side), water droplets are hardly observed on an inner surface of the resin film or the first resin layer of the laminated film, and the article can be well visually recognized through the film.

### SOLUTIONS TO PROBLEMS

As a result of intensive studies, the present inventors have found that a masterbatch formed by combining a non-modified polyolefin resin, a specific ethylene vinyl acetate copolymer, and a specific antifogging agent is suitable as a raw material for producing a polyolefin-based resin film excellent in transparency and an antifogging property.

The present invention is indicated below.

The masterbatch of the present invention includes a non-modified polyolefin resin (hereinafter, also referred to as a "non-modified polyolefin resin (A)"), an ethylene vinyl acetate copolymer (hereinafter, also referred to as an "ethylene vinyl acetate copolymer (B)"), and an antifogging agent (hereinafter, also referred to as an "antifogging agent (C)"), and is characterized in that a content of a structural unit derived from vinyl acetate constituting the ethylene vinyl acetate copolymer (B) is in a range from 5% to 30% by mol, that the antifogging agent (C) is a fatty acid ester formed from a fatty acid and a polyhydric alcohol, and that a content of the ethylene vinyl acetate copolymer (B) is in a range from 7 to 75 parts by mass based on 100 parts by mass of the non-modified polyolefin resin (A).

A content of the antifogging agent (C) is preferably in a range from 6 to 60 parts by mass based on 100 parts by mass of the non-modified polyolefin resin (A).

The resin composition of the present invention is characterized by including the above masterbatch of the present invention.

The production method of a polyolefin-based resin film of the present invention is characterized by subjecting the above resin composition of the present invention to a film molding.

The polyolefin-based resin film of the present invention includes a non-modified polyolefin resin (A), an ethylene vinyl acetate copolymer (B), and an antifogging agent (C), and is characterized in that a content of a structural unit derived from vinyl acetate constituting the ethylene vinyl acetate copolymer is in a range from 5% to 30% by mol, that the antifogging agent is a fatty acid ester formed from a fatty acid and a polyhydric alcohol, that a content of the ethylene vinyl acetate copolymer is in a range from 0.20 to 67.00 parts by mass based on 100 parts by mass of the non-modified polyolefin resin, and that a content of the antifogging agent is in a range from 0.20 to 12.00 parts by mass based on 100 parts by mass of the non-modified polyolefin resin.

The laminated film of the present invention is characterized by laminating a resin layer (first resin layer) consisting of a polyolefin-based resin film and other layers.

### ADVANTAGEOUS EFFECTS OF INVENTION

The masterbatch of the present invention is suitable as a raw material for producing a polyolefin-based resin film excellent in transparency and an antifogging property. Since the resin composition of the present invention contains the masterbatch of the present invention, the resin composition is suitable for producing a polyolefin-based resin film excellent in transparency and an antifogging property. In addition, according to the production method of a polyolefin-based resin film of the present invention using the resin composition of the present invention, or a production method of a polyolefin-based resin film of the present invention using a mixture including a masterbatch containing the non-modified polyolefin resin (A) and the antifogging agent (C), occurrence of extrusion variation during film formation is suppressed in a film molding by extrusion, and a film having a uniform configuration can be efficiently obtained. Further, a laminated film of the present invention is excellent in transparency and an antifogging property.

### DESCRIPTION OF EMBODIMENT

The masterbatch of the present invention is an article that has a cylindrical shape, a prismatic shape, a spherical shape, an elliptically spherical shape, or the like and is composed of a thermoplastic resin composition containing a non-modified polyolefin resin (A), an ethylene vinyl acetate copolymer (B), and an antifogging agent (C) at a specific ratio. The masterbatch of the present invention may contain an additive (which will be described later) that is conventionally blended in a known resin product as necessary.

The non-modified polyolefin resin (A) is a resin that does not include a hetero atom or a functional group having a hetero atom, and is a polymer compound composed of only one or two or more of structural units represented by the following general formula (1). 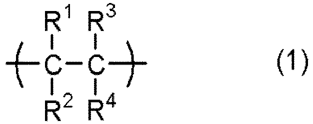 (In the formula, R¹, R², R³ and R⁴ are each independently a hydrogen atom or an alkyl group having 1 to 8 carbon atoms.)

Examples of the non-modified polyolefin resin (A) include a polyethylene composed only of a structural unit in which all of R¹, R², R³ and R⁴ in the general formula (1) are hydrogen atoms; a polypropylene composed only of a structural unit in which R¹, R² and R³ in the general formula (1) are hydrogen atoms and R⁴ is a methyl group; an ethylene α-olefin copolymer composed of a structural unit in which all of R¹, R², R³ and R⁴ in the general formula (1) are hydrogen atoms and a structural unit in which R¹, R² and R³ in the general formula (1) are hydrogen atoms and R⁴ is an alkyl group having 1 to 8 carbon atoms; and the like. Among them, an ethylene α-olefin copolymer is preferable, and, an ethylene α-olefin copolymer containing a structural unit derived from an α-olefin having 3 to 8 carbon atoms is particularly preferable such as an ethylene propylene copolymer, an ethylene 1-butene copolymer, an ethylene 1-hexene copolymer, and an ethylene 1-octene copolymer.

The non-modified polyolefin resin (A) contained in the masterbatch of the present invention may be one type, or two or more types.

The ethylene vinyl acetate copolymer (B) is a copolymer of ethylene and vinyl acetate. Since the content of the structural unit derived from vinyl acetate is in a range from 5% to 30% by mol, the ethylene vinyl acetate copolymer (B) has excellent compatibility with the non-modified polyolefin resin (A), and can improve the retention of the antifogging agent (C) and an additive to be blended as necessary in a matrix mainly composed of the non-modified polyolefin resin (A). A density and an MFR of the ethylene vinyl acetate copolymer (B) are not particularly limited.

The ethylene vinyl acetate copolymer (B) contained in the masterbatch of the present invention may be one type, or two or more types.

A content ratio of the ethylene vinyl acetate copolymer (B) in the masterbatch is in a range from 7 to 75 parts by mass, and preferably from 7 to 55 parts by mass based on 100 parts by mass of a content of the non-modified polyolefin resin (A), since a polyolefin-based resin film excellent in transparency and an antifogging property is easily obtained in the present invention.

The antifogging agent (C) according to the present invention is a fatty acid ester formed from a fatty acid and a polyhydric alcohol. The fatty acid ester is preferably a partial ester, that is, an ester compound having at least one free hydroxy group in the molecule, from a viewpoint of the antifogging property to be imparted to the film.

The fatty acid used as a raw material for the fatty acid ester is a compound in which a hydrogen atom in a hydrocarbon group may be substituted with a hydroxy group, and is preferably an aliphatic carboxylic acid having a total number of carbon atoms of 8 to 22. Examples of such a fatty acid include caprylic acid, pelargonic acid, capric acid, undecylic acid, undecylenic acid, lauric acid, tridecylic acid, myristic acid, pentadecylic acid, palmitic acid, margaric acid, stearic acid, isostearic acid, arachidic acid, henicosylic acid, docosanoic acid, oleic acid, ricinoleic acid, linolenic acid, erucic acid, behenic acid, 12 hydroxystearic acid, ricinoleic acid, and the like. Examples of the polyhydric alcohol used as a raw material for the fatty acid ester include ethylene glycol, propyleneglycol, glycerin, sorbitan, sorbide, sorbitol, glucose, ethylene glycol diglyceryl ether, trimethylolpropane diglyceryl ether, pentaerythritol, dipentaerythritol, a glycerin condensate such as diglycerin, triglycerin, tetraglycerin and decaglycerin, and the like. Among these, sorbitan, sorbide, sorbitol, glycerin, and a glycerin condensate are preferable, glycerin or a glycerin condensate having a degree of condensation of 2 to 10 is more preferable, and glycerin or a glycerin condensate having a degree of condensation of 2 is particularly preferable.

Specific examples of the antifogging agent (C) include a partial ester of glycerin and lauric acid, a partial ester of glycerin and oleic acid, a partial ester of glycerin and behenic acid, a partial ester of glycerin and stearic acid, a partial ester of diglycerin and lauric acid, a partial ester of diglycerin and caprylic acid, a partial ester of diglycerin and oleic acid, a partial ester of diglycerin and stearic acid, a partial ester of sorbitan and lauric acid, a partial ester of sorbitan and stearic acid, a partial ester of sorbitan and oleic acid, a partial ester of tetraglycerin and lauric acid, a partial ester of tetraglycerin and stearic acid, a partial ester of tetraglycerin and oleic acid, a partial ester of decaglycerin and oleic acid, a partial esters of propyleneglycol and lauric acid, a partial ester of propyleneglycol and oleic acid, a partial ester of propyleneglycol and stearic acid, and the like.

The antifogging agent (C) contained in the masterbatch of the present invention may be one type, or two or more types.

A content ratio of the antifogging agent (C) in the masterbatch is preferably in a range from 6 to 60 parts by mass, and more preferably from 6 to 42 parts by mass based on 100 parts by mass of a content of the non-modified polyolefin resin (A), since a polyolefin-based resin film excellent in transparency and an antifogging property is easily obtained in the present invention.

The masterbatch of the present invention may contain conventionally publicly known other antifogging agents in addition to the antifogging agent (C) as necessary. Examples of other antifogging agents include an alkylsulfonic acid alkali metal salt, an alkylarylsulfonic acid alkali metal salt, an alkylsulfate alkali metal salt, alkyldiethanolamide, a product obtained by adding an alkylene oxide to a higher alcohol, a product obtained by adding an alkylene oxide to an aliphatic carboxylic acid, an ester of an aliphatic carboxylic acid and a polyoxyalkylene glycol, and the like.

In the case where the masterbatch of the present invention contains other antifogging agents, an upper limit of a content ratio thereof is preferably 30 parts by mass based on 100 parts by mass of the antifogging agent (C).

The masterbatch of the invention may, as described above, contain an additive. Examples of the additive include a plasticizer, an antioxidant, an ultraviolet absorber, a weathering agent, a heat stabilizer, an anti-blocking agent, an antistatic agent, a lubricant, a flame retardant, a neutralizing agent, and the like.

Examples of the plasticizer include a phthalic acid ester, an adipic acid ester, sebacic acid ester, a phosphate, and the like.

Examples of the antioxidant include a phenol-based compound, an amine-based compound, a sulfur-containing compound, a phosphorus-containing compound, and the like.

Examples of the ultraviolet absorber include a benzophenone-based compound, a benzotriazole-based compound, a triazine-based compound, a salicylic acid ester-based compound, and the like.

Examples of the antiblocking agent include an oxide such as silica, diatomaceous earth, alumina, iron oxide and ferrite; a silicate such as zeolite, talc, wollastonite, mica and clay; a crosslinked polymer such as a crosslinked polysilicone, a crosslinked polyamide, a crosslinked polytriazine, a crosslinked polyacrylic acid and a crosslinked polystyrene; and the like.

In the case where the masterbatch of the present invention contains the antiblocking agent, a content ratio of the antiblocking agent is preferably in a range from 0.1 to 30.0 parts by mass based on 100 parts by mass of a total content of the non-modified polyolefin resin (A) and the ethylene vinyl acetate copolymer (B).

Examples of the antistatic agent include a partial ester of propylene glycol and a fatty acid, a partial ester of glycerin and a fatty acid, a partial ester of diglycerin and a fatty acid, a partial ester of tetraglycerin and a fatty acid, a partial ester of sorbitan and a fatty acid, a higher alcohol sulfuric acid ester salt, a liquid fatty oil sulfuric acid ester salt, a sulfuric acid salt of an aliphatic amine and an aliphatic amide, an aliphatic alcohol phosphoric acid ester salt, a sulfonic acid salt of a dibasic fatty acid ester, an aliphatic amide sulfonic acid salt, an alkylsulfonic acid alkali metal salt, an alkylaryl sulfonic acid salt, a naphthaline sulfonic acid salt of formalin condensation, an aliphatic amine salt, a quaternary ammonium salt, an alkyl pyridinium salt, a polyoxyethylene alkyl ether, a polyoxyethylene alkylphenol ether, a polyoxyethylene alkyl ester, a sorbitan alkyl ester, a polyoxyethylene sorbitan alkyl ester, an imidazoline derivative, a betaine type higher alkylamino derivative, a sulfuric acid ester derivative, a phosphoric acid ester derivative, and the like.

Examples of the lubricant include a silane compound, a polyolefin-based wax, a fatty acid amide, and the like.

The masterbatch of the present invention can be produced by melt-kneading a composition containing the non-modified polyolefin resin (A), the ethylene vinyl acetate copolymer (B), and the antifogging agent (C), and then subjecting the melt-kneaded product to a conventionally publicly known extrusion method. Specific production methods are as follows.
(1) A method in which the non-modified polyolefin-based resin (A), the ethylene vinyl acetate copolymer (B), and the antifogging agent (C) are charged into a mixer such as a tumbler blender, a super mixer, and a Henschel mixer in advance and mixed, and the mixture is granulated while being melt-kneaded by an extruder such as a single screw extruder and a multi-screw extruder to obtain a masterbatch.
(2) A method in which a mixture of the non-modified polyolefin-based resin (A) and the ethylene vinyl acetate copolymer (B) is brought into a molten state by an extruder such as a single screw extruder and a multi-screw extruder, the antifogging agent (C) is fed by side feed or liquid injection to mix, and the mixture is granulated while being melt-kneaded to obtain a masterbatch.
(3) A method in which the non-modified polyolefin-based resin (A), the ethylene vinyl acetate copolymer (B), and the antifogging agent (C) are fed to an extruder such as a single screw extruder and a multi-screw extruder with a feeder, and the mixture is granulated while being melt-kneaded to obtain a masterbatch.
(4) A method in which the non-modified polyolefin-based resin (A) and the ethylene vinyl acetate copolymer (B) are fed to an extruder such as a single screw extruder and a multi-screw extruder with a feeder, the antifogging agent (C) is fed to the extruder by side feed or liquid injection, and the mixture is granulated while being melt-kneaded to obtain a masterbatch.

In the methods (1), (2), (3), and (4), when the non-modified polyolefin-based resin (A), the ethylene vinyl acetate copolymer (B), and the antifogging agent (C) are mixed, the mixer to be employed and the raw material feeding method to be employed may be selected depending on properties or the like of the non-modified polyolefin-based resin (A), the ethylene vinyl acetate copolymer (B), and the antifogging agent (C). When the raw material is solid, it is preferable to employ mixing by a mixer such as a tumbler blender, a super mixer, and a Henschel mixer; a feeder; or side feed. When the raw material is liquid, it is preferable to employ liquid injection or a mixer such as a super mixer and a Henschel mixer. The solid raw material may also be used as a liquid or a liquid-like material after being dissolved or dispersed in the liquid raw material.

A polyolefin-based resin film excellent in transparency and an antifogging property can be produced by subjecting the masterbatch of the present invention to film molding as it is or subjecting a composition containing the masterbatch in combination with other components (other masterbatch or the like). Therefore, the masterbatch of the present invention is suitable as a raw material for producing a polyolefin-based resin film excellent in transparency and an antifogging property.

The resin composition of the present invention is characterized by containing the masterbatch of the present invention. The resin composition of the present invention is suitable for production of a polyolefin-based resin film excellent in transparency and an antifogging property. In the case of producing such a polyolefin-based resin film, a resin composition composed only of the masterbatch of the present invention is used as it is, or a resin composition composed of a mixture containing the masterbatch of the present invention and other components is used.

The other components are not particularly limited and includes preferably a resin or a composition containing a resin and an additive (hereinafter, this mixture is referred to as "other composition"), and these may be only one type or two or more types.

The resin composition of the present invention is particularly preferably composed of the masterbatch of the present invention and other components.

The resin contained in the other components is preferably a thermoplastic resin having compatibility with the non-modified polyolefin resin (A) contained in the masterbatch of the present invention. Examples of such a thermoplastic resin include a non-modified polyolefin resin (A) that is the same as or different from that contained in the masterbatch of the present invention; a copolymer composed of a structural unit represented by the general formula (1) and a structural unit derived from at least one selected from an alicyclic vinyl compound and an aromatic vinyl compound, both of which are hydrocarbons; and the like. The resin contained in the other components may contain an ethylene vinyl acetate copolymer (B) that is the same as or different from the ethylene vinyl acetate copolymer (B) contained in the masterbatch of the present invention.

Examples of the additive include an antifogging agent, a plasticizer, an antioxidant, an ultraviolet absorber, a weathering agent, a heat stabilizer, an anti-blocking agent, an antistatic agent, a lubricant, a flame retardant, a neutralizing agent, and the like. Examples of the antifogging agent include an antifogging agent (C) that is the same as or different from that contained in the masterbatch of the present invention, and other antifogging agents that may be incorporated in the masterbatch of the present invention.

When the resin composition of the present invention is composed of the masterbatch of the present invention and other components (such as a resin and other composition), and the resin contained in other components is the non-modified polyolefin resin (A), a content ratio of the ethylene vinyl acetate copolymer (B) derived from the masterbatch of the present invention is preferably in a range from 0.20 to 67.00 parts by mass, and more preferably from 0.40 to 42.00 parts by mass, based on 100 parts by mass of a total of the non-modified polyolefin resin (A) derived from the masterbatch of the present invention and the non-modified polyolefin resin (A) contained in the other components. A content of the antifogging agent (C) derived from the masterbatch of the present invention is preferably in a range from 0.20 to 12.00 parts by mass, and more preferably from 0.30 to 11.00 parts by mass, based on 100 parts by mass of a total of the non-modified polyolefin resin (A) derived from the masterbatch of the present invention and the resin as the other components.

The polyolefin-based resin film of the present invention is a film excellent in transparency and an antifogging property, containing a non-modified polyolefin resin (A), an ethylene vinyl acetate copolymer (B), and an antifogging agent (C), which are the same as those contained in the masterbatch of the present invention. A content of the ethylene vinyl acetate copolymer (B) is in a range from 0.20 to 67.00 parts by mass, and more preferably 0.40 to 42.00 parts by mass, based on 100 parts by mass of the non-modified polyolefin resin (A). A content of the antifogging agent (C) is preferably in a range from 0.20 to 12.00 parts by mass, and more preferably from 0.30 to 11.00 parts by mass, based on 100 parts by mass of the non-modified polyolefin resin (A).

The polyolefin-based resin film of the present invention may contain other resins, an additive, and the like as necessary. The other resins include preferably a thermoplastic resin having compatibility with the non-modified polyolefin resin (A), and examples thereof include a copolymer composed of a structural unit represented by the general formula (1) and a structural unit derived from at least one selected from an alicyclic vinyl compound and an aromatic vinyl compound, both of which are hydrocarbons, and the like.

Examples of the additive include an antifogging agent except the antifogging agent (C), a plasticizer, an antioxidant, an ultraviolet absorber, a weathering agent, a heat stabilizer, an anti-blocking agent, an antistatic agent, a lubricant, a flame retardant, a neutralizing agent, and the like.

A thickness of the polyolefin-based resin film of the present invention is not particularly limited, but is preferably in a range from 5 to 150 µm, and more preferably from 10 to 120 µm.

A production method of the polyolefin-based resin film of the present invention is not particularly limited. A method of subjecting a raw material composition containing the non-modified polyolefin resin (A), the ethylene vinyl acetate copolymer (B), and the antifogging agent (C) in proportions constituting a film to a film molding such as an extrusion method (inflation molding method, or T-die casting method), a calender molding method, and a press molding method can be applied.

In the present invention, the resin composition containing the masterbatch of the present invention is subjected to a film molding. Content ratios of the non-modified polyolefin resin (A), the modifier (B), and the antifogging agent (C) in this resin composition are usually the same as content ratios of the non-modified polyolefin resin (A), the ethylene vinyl acetate copolymer (B), and the antifogging agent (C) in the polyolefin-based resin film of the present invention. In the masterbatch of the present invention, the content ratios of the ethylene vinyl acetate copolymer (B) and the antifogging agent (C) to the non-modified polyolefin resin (A) can be both set to a wide range. Therefore, when at least one of the modifier (B) and the antifogging agent (C) has a high concentration in the masterbatch, the resin composition is used as a product composed of the present masterbatch and other components (a resin or other composition), and the high-concentration component can be diluted with the other components to adjust the content ratio thereof to a specific range constituting the polyolefin-based resin film of the present invention. Various polyolefin-based resin films having different content ratios of the ethylene vinyl acetate copolymer (B) or the antifogging agent (C) can be efficiently produced by appropriately modifying the configuration of the other components to be used in combination with the masterbatch of the present invention.

The particularly preferable production method is one in which a resin composition consisting of the present masterbatch and other components that contains mainly a non-modified polyolefin resin (A) and may contain an antifogging agent (C) is subjected to a film molding.

Other methods for producing the polyolefin-based resin film of the present invention are exemplified below.
(i) A method using a resin composition including a masterbatch containing a non-modified polyolefin resin (A) and an ethylene vinyl acetate copolymer (B) but not containing an antifogging agent (C), and other components containing a non-modified polyolefin resin (A) and an antifogging agent (C) but not containing an ethylene vinyl acetate copolymer (B).
(ii) A method using a resin composition including a masterbatch containing a non-modified polyolefin resin (A) and an antifogging agent (C) and not containing an ethylene vinyl acetate copolymer (B), an ethylene vinyl acetate copolymer (B), and a non-modified polyolefin resin (A) to be used in combination as necessary.
(iii) A method using a resin composition including a masterbatch containing an ethylene vinyl acetate copolymer (B) and an antifogging agent (C) and not containing a non-modified polyolefin resin (A), and a non-modified polyolefin resin (A).

The production method of the polyolefin-based resin film in the present invention is preferably a method using a resin composition including a masterbatch containing a non-modified polyolefin resin (A), an ethylene vinyl acetate copolymer (B) and an antifogging agent (C), and a non-modified polyolefin resin (A), and a method using a resin composition including a masterbatch (hereinafter, referred to as "antifogging agent-containing masterbatch") containing a non-modified polyolefin resin (A) and an antifogging agent (C) and not containing an ethylene vinyl acetate copolymer (B); an ethylene vinyl acetate copolymer (B); and a non-modified polyolefin resin (A). And the particularly preferred is a production method using a resin composition including a masterbatch containing a non-modified polyolefin resin (A), an ethylene vinyl acetate copolymer (B) and an antifogging agent (C), and a non-modified polyolefin resin (A).

In the antifogging agent-containing masterbatch, a content ratio of the antifogging agent (C) is preferably in a range from 6 to 60 parts by mass, and more preferably from 6 to 42 parts by mass, based on 100 parts by mass of the non-modified polyolefin resin (A).

When the polyolefin-based resin film of the present invention is produced using the above resin composition, a conventionally publicly known film molding method can be applied. Examples of the method include inflation molding such as air-cooling inflation molding, air-cooling two-stage inflation molding, air-cooling three-stage inflation molding, and water-cooling inflation molding; T-die molding using a straight manifold type, a coat hanger type, a combination thereof, or the like as a T-die; calender molding; and the like. The polyolefin-based resin film of the present invention may be either unstretched or stretched. Examples of a stretching method in the case of forming a stretched film include a sequential biaxial stretching method, a simultaneous biaxial stretching method, a tubular biaxial stretching method, and the like.

In the present invention, after film formation by the above film molding, surface modification may be performed by a plasma treatment, a corona treatment, a flame treatment, a chemical liquid treatment with an acid or an alkali, or the like as necessary.

Next, the laminated film of the present invention is a film in which a resin layer (first resin layer) composed of the polyolefin-based resin film of the present invention and other layers are laminated.

Materials constituting the other layers are not particularly limited. The other layers may be made of either an organic material or an inorganic material, or may contain both materials. In addition, the number of the other layers may be one or two or more. In the case the other layers are of two or more layers, the other layers may be disposed only on one surface side of the first resin layer, or may be disposed on both surfaces of the first resin layer.

Examples of the other layers include other resin layers, adhesive layers, anchor coat layers, metal layers, and the like. The other layers are preferably layers containing a thermoplastic resin. Examples of the thermoplastic resin include a polyolefin-based resin such as a non-modified polyolefin resin, and a modified polyolefin resin; a polyester resin such as polyethylene terephthalate; a polyamide resin such as nylon 6; a polyvinyl alcohol; an ethylene vinyl alcohol; a styrene-based resin such as polystyrene; an acrylic resin such as polymethyl methacrylate; and the like. The other layers may contain an additive such as a heat stabilizer, an antioxidant, a neutralizing agent, an antistatic agent, a lubricant, a weathering agent, an ultraviolet absorber, an anti-blocking agent, an antistatic agent, and an antifogging agent. When the other layers contain a metal layer, the layer may be aluminum layer or the like.

As described above, the number of the other layers in the laminated film of the present invention is one or two or more. Since the first resin layer usually has flexibility, the other layers can retain or improve the flexibility of the laminated film, or oxygen barrier properties, aroma retaining properties, pinhole resistance, and impart curl resistance to the laminated film. In order to achieve such an object, it is preferable to appropriately set the number of the other layers and the thickness of each layer according to the intended use of the laminated film.

A particularly preferable configuration of the laminated film of the present invention includes a first resin layer and other resin layers, and the other resin layers are two adjacent thermoplastic resin layers that are the same as or different from each other. When the adjacent thermoplastic resin layers are defined as a second resin layer and a third resin layer from the first resin layer side, a ratio among thicknesses of the first resin layer, the second resin layer, and the third resin layer in the three-layered laminated film is preferably 1: 0.5 to 10: 0.5 to 10, and more preferably 1: 1 to 5: 1 to 5. A total thickness of the three-layered laminated film is preferably in a range from 20 to 150 µm, and more preferably from 30 to 120 µm.

When transparency is imparted to the three-layer type laminated film, both the second resin layer and the third resin layer only have to be mainly composed of a thermoplastic resin having transparency, but, when the thermoplastic resin is a non-modified polyolefin resin (A) which is the same as or different from that contained in the first resin layer, an antifogging agent may be further contained in at least one of the second resin layer and the third resin layer. At this time, the antifogging agent may be the antifogging agent (C) contained in the first resin layer, or may be other antifogging agents. When the second resin layer and the third resin layer contain an antifogging agent, these resin layers may further contain a modifier such as an ethylene vinyl acetate copolymer.

The laminated film of the present invention can be produced by conventionally publicly known methods. The production method is appropriately selected depending on configurations of the other layers, the intended use of the laminated film, and the like. A lamination method, a coextrusion method, or the like is preferably applied. Among them, examples of the lamination method include a dry lamination method, a sand lamination method, an extrusion lamination method, and the like. When the laminated film is produced by these lamination methods, lamination can be performed using a publicly known adhesive (a polyurethane-based adhesive, an organic titanium-based anchor coating agent, an isocyanate-based anchor coating agent, an adhesive resin, or the like), in a state where the adhesive is interposed between the polyolefin-based resin film and the resin films forming any other resin layer. In the case of the coextrusion method, a method of subjecting the resin composition of the present invention forming the first resin layer and a composition for forming any other resin layer (thermoplastic resin composition) to inflation molding or T-die molding can be used, and stretching may be performed as necessary.

Examples of the method of producing a laminated film when the other layer is a metal layer include a method in which the polyolefin-based resin film of the present invention and a metal foil are bonded with an adhesive, and a method in which metal vapor deposition is carried out on a surface of the polyolefin-based resin film of the present invention.

The polyolefin-based resin film of the present invention is suitable as a packaging film for packaging an article. In particular, after a food having a water-containing property or having moisture attached to a surface thereof (such as a vegetable) is packaged with the film, and placed and left in an atmosphere at, for example, 10°C or lower, dew condensation occurs on an inner surface of the film due to the moisture evaporated from the food, but the appearance does not become opaque, the visibility of the article at the beginning of packaging is retained, and deterioration in commercial value can be suppressed. In the case of a laminated film, the first resin layer derived from the polyolefin-based resin film of the present invention is used so as to be located on the article side.

### EXAMPLES

Hereinafter, in order to make the configuration and effects of the present invention more specific, Examples and the like are indicated, but the present invention is not limited to these Examples. In the following Examples and Comparative Examples, "%" and "parts" may mean "% by mass" and "parts by mass", respectively.

### 1. Test section 1 (preparation of antifogging agent)

Raw materials for the antifogging agent are as follows.
1-1. Fatty acid ester (C)
   C-1: partial ester of diglycerin and lauric acid
   C-2: partial ester of diglycerin and caprylic acid
   C-3: partial ester of glycerin and oleic acid
   C-4: partial ester of glycerin and behenic acid
   C-5: partial ester of tetraglycerin and lauric acid
   C-6: partial ester of decaglycerin and oleic acid
   C-7: partial ester of sorbitan and lauric acid
   C-8: partial ester of propyleneglycol and oleic acid
1-2. Other Compounds (D)
   D-1: Mixture of sodium alkylsulfonates having an alkyl group with 13 to 18 carbon atoms (mixture of six compounds, that is, mixture of sodium tridecylsulfonate having an alkyl group with 13 carbon atoms, sodium tetradecylsulfonate having an alkyl group with 14 carbon atoms, sodium pentadecylsulfonate having an alkyl group with 15 carbon atoms, sodium hexadecylsulfonate having an alkyl group with 16 carbon atoms, sodium heptadecylsulfonate having an alkyl group with 17 carbon atoms, and sodium octadecylsulfonate having an alkyl group with 18 carbon atoms.

### Preparation Example 1

80% of a partial ester of diglycerin and lauric acid (C-1) and 20% of a mixture of sodium alkylsulfonates (D-1) were uniformly mixed to prepare an antifogging agent (CC-1) (see Table 1).

### Preparation Examples 2 to 7

The raw materials shown in Table 1 were used in the same manner as that in Preparation Example 1 to prepare antifogging agents (CC-2) to (CC-7) (see Table 1).

**[Table 1]**

| | Antifogging agent | Raw material | | | | |
|---|---|---|---|---|---|---|
| | | Type | Used amount (%) | Type | Used amount (%) | |
| Preparation Example 1 | CC-1 | C-1 | 80 | D-1 | 20 | |
| Preparation Example 2 | CC-2 | C-2 | 80 | D-1 | 20 | |
| Preparation Example 3 | CC-3 | C-3 | 90 | | | |
| | | C-8 | 10 | | | |
| Preparation Example 4 | CC-4 | C-4 | 100 | | | |
| Preparation Example 5 | CC-5 | C-5 | 90 | | | |
| | | C-8 | 10 | | | |
| Preparation Example 6 | CC-6 | C-6 | 80 | | | |
| | | C-8 | 20 | | | |
| Preparation Example 7 | CC-7 | C-7 | 80 | D-1 | | 20 |

### 2. Test Section 2 (production of masterbatch containing ethylene vinyl acetate copolymer and antifogging agent)

Raw materials used for production of a masterbatch containing a non-modified polyolefin resin, an ethylene vinyl acetate copolymer, and an antifogging agent, and for production of a film containing these components are described.

Following polymers were used as the non-modified polyolefin resin (A).

### (A-1) Ethylene 1-butene copolymer

It is a copolymer having a 1-butene unit in an amount of 10%, a density of 0.920 g/cm³, and an MFR of 2.1 g/10 min at a temperature of 190°C and a load of 2.16 kgf.

### (A-2) Ethylene 1-hexene copolymer

It is a copolymer having a 1-hexene unit in an amount of 5%, a density of 0.936 g/cm³, and an MFR of 2.0 g/10 min at a temperature of 190°C and a load of 2.16 kgf.

### (A-3) Ethylene 1-octene copolymer

It is a copolymer having a 1-octene unit in an amount of 10%, a density of 0.931 g/cm³, and an MFR of 2.8 g/10 min at a temperature of 190°C and a load of 2.16 kgf.

### (A-4) Ethylene 1-hexene copolymer

It is a copolymer having a 1-hexene units in an amount of 10%, a density of 0.924 g/cm³, and an MFR of 2.0 g/10 min at a temperature of 190°C and a load of 2.16 kgf.

### (A-5) Ethylene 1-butene propylene copolymer

It is a copolymer having a 1-butene unit in an amount of 4% and a propylene unit in an amount of 96%, a density of 0.90 g/cm³ and an MFR of 7.0 g/10 min at a temperature of 190°C and a load of 2.16 kgf.

Following polymers were used as the ethylene vinyl acetate copolymer (B).

### (B-1) Ethylene vinyl acetate copolymer

It is a copolymer having a vinyl acetate unit in an amount of 15%, a density of 0.936 g/cm³, and an MFR of 2.0 g/10 min at a temperature of 190°C and a load of 2.16 kgf.

### (B-2) Ethylene vinyl acetate copolymer

It is a copolymer having a vinyl acetate unit in an amount of 6%, a density of 0.925 g/cm³, and an MFR of 2.0 g/10 min at a temperature of 190°C and a load of 2.16 kgf.

### (B-3) Ethylene vinyl acetate copolymer

It is a copolymer having a vinyl acetate unit in an amount of 25%, a density of 0.950 g/cm³, and an MFR of 2.0 g/10 min at a temperature of 190°C and a load of 2.16 kgf.

### (b-1) Ethylene vinyl acetate copolymer

It is a copolymer having a vinyl acetate unit in an amount of 42%, and an MFR of 2.0 g/10 min at a temperature of 190°C and a load of 2.16 kgf.

### (b-2) Ethylene vinyl acetate copolymer

It is a copolymer having a vinyl acetate unit in an amount of 3%, and an MFR of 2.0 g/10 min at a temperature of 190°C and a load of 2.16 kgf.

Hereinafter, production examples of a masterbatch which is a raw material for use in preparation of a polyolefin-based resin film containing an ethylene vinyl acetate copolymer and an antifogging agent (e.g., a masterbatch containing a non-modified polyolefin resin, an ethylene vinyl acetate copolymer, and an antifogging agent) will be described.

### Example 1-1

100 parts of the ethylene 1-butene copolymer (A-1) and 14.3 parts of the ethylene vinyl acetate copolymer (B-1) were mixed in a tumbler. The mixture was then brought into a molten state at 220°C by a twin-screw extruder, 35.8 parts of the antifogging agent (CC-1) was fed to the extruder including the molten mixture by liquid injection, and all the raw materials were melt-kneaded. Subsequently, the mixture was granulated to obtain a masterbatch (M-1) having a configuration shown in Table 2.

When the masterbatch was produced, the production stability (productivity) of the masterbatch was visually observed and evaluated according to the following criteria. The evaluation results are also shown in Table 2.

### <Criteria for determining masterbatch productivity>

1: No bent-up or violent motion of strand occurred during masterbatch production (very excellent production stability)
2: During masterbatch production, the traveling of the strand was disturbed in some cases, but no bent-up occurred (excellent production stability)
3: Violent motion of strand and bent-up occurred during masterbatch production (poor production stability)

### Example 1-2

100 parts of the ethylene 1-hexene copolymer (A-2) and 18.8 parts of the ethylene vinyl acetate copolymer (B-2) were mixed in a tumbler. The mixture was then brought into a molten state at 220°C by a twin-screw extruder, 7.9 parts of the antifogging agent (CC-2) was fed to the extruder including the molten mixture by liquid injection, and all the raw materials were melt-kneaded. Subsequently, the mixture was granulated to obtain a masterbatch (M-2) (see Table 2).

### Example 1-3

100 parts of the ethylene 1-octene copolymer (A-3) and 7.1 parts of the ethylene vinyl acetate copolymer (B-3) were mixed in a tumbler. The mixture was then brought into a molten state at 220°C by a twin-screw extruder, 39.7 parts of the antifogging agent (CC-3) was fed to the extruder including the molten mixture by liquid injection, and all the raw materials were melt-kneaded. Subsequently, the mixture was granulated to obtain a masterbatch (M-3) (see Table 2).

### Example 1-4

100 parts of the ethylene 1-hexene copolymer (A-4) and 54.5 parts of the ethylene vinyl acetate copolymer (B-1) were mixed in a tumbler. The mixture was then brought into a molten state at 220°C by a twin-screw extruder, 27.3 parts of the antifogging agent (CC-4) was fed to the extruder including the molten mixture by liquid injection, and all the raw materials were melt-kneaded. Subsequently, the mixture was granulated to obtain a masterbatch (M-4) (see Table 2).

### Example 1-5

100 parts of the ethylene 1-butene propylene copolymer (A-5) and 13.5 parts of the ethylene vinyl acetate copolymer (B-1) were mixed in a tumbler. The mixture was then brought into a molten state at 220°C by a twin-screw extruder, 21.0 parts of the antifogging agent (CC-5) was fed to the extruder including the molten mixture by liquid injection, and all the raw materials were melt-kneaded. Subsequently, the mixture was granulated to obtain a masterbatch (M-5) (see Table 2).

### Example 1-6

100 parts of the ethylene 1-butene copolymer (A-1) and 13.3 parts of the ethylene vinyl acetate copolymer (B-1) were mixed in a tumbler. The mixture was then brought into a molten state at 220°C by a twin-screw extruder, 25.0 parts of the antifogging agent (CC-6) was fed to the extruder including the molten mixture by liquid injection, and all the raw materials were melt-kneaded. Subsequently, the mixture was granulated to obtain a masterbatch (M-6) (see Table 2).

### Example 1-7

A masterbatch (M-7) was obtained by performing the same procedure as those in Example 1-1 except using the antifogging agent (CC-7) instead of the antifogging agent (CC-1) (see Table 2).

### Comparative Example 1-1

A masterbatch (m-1) was obtained by performing the same procedures as those in Example 1-1 except using 100 parts of the ethylene 1-butene copolymer (A-1), 1.5 parts of the ethylene vinyl acetate copolymer (B-1), and 79.5 parts by mass of the antifogging agent (CC-1) (see Table 2).

### Comparative Example 1-2

100 parts of the ethylene 1-butene copolymer (A-1) and 11.1 parts of the ethylene vinyl acetate copolymer (b-1) were mixed in a tumbler. The mixture was then brought into a molten state at 220°C by a twin-screw extruder. Subsequently, the mixture was granulated to obtain a masterbatch (m-2) (see Table 2).

### Comparative Example 1-3

100 parts of the ethylene 1-butene copolymer (A-1) and 77.8 parts of the ethylene vinyl acetate copolymer (b-2) were mixed in a tumbler. The mixture was then brought into a molten state at 220°C by a twin-screw extruder, 55.5 parts of the antifogging agent (CC-1) was fed to the extruder including the molten mixture by liquid injection, and all the raw materials were melt-kneaded. Subsequently, the mixture was granulated to obtain a masterbatch (m-3) (see Table 2).

### Comparative Example 1-4

100 parts of the ethylene 1-butene copolymer (A-1) was brought into a molten state at 220°C by a twin-screw extruder, 31.3 parts of the antifogging agent (CC-1) was fed to the extruder including the molten mixture by liquid injection, and all the raw materials were melt-kneaded. Subsequently, the mixture was granulated to obtain a masterbatch (m-4) (see Table 2).

**[Table 2]**

| | | Masterbatch | | | | | | | | | | | | | Masterbatch productivity |
|---|---|---|---|---|---|---|---|---|---|---|---|---|---|---|---|
| | | Type | Raw material | | | | | | Main configuration | | | | | | |
| | | | Non-modified polyolefin resin | | Ethylene vinyl acetate copolymer | | Antifogging agent | | Non-modified polyolefin resin (A) | | Ethylene vinyl acetate copolymer (B) | | Antifogging agent (C) | | |
| | | | Type | Used (parts) | Type | Used (parts) | Type | Used (parts) | Type | Content (parts) | Type | Content (parts) | Type | Content (parts) | |
| Example | 1-1 | M-1 | A-1 | 100 | B-1 | 14.3 | CC-1 | 35.8 | A-1 | 100 | B-1 | 14.3 | C-1 | 28.6 | 1 |
| | 1-2 | M-2 | A-2 | 100 | B-2 | 18.8 | CC-2 | 7.9 | A-2 | 100 | B-2 | 18.8 | C-2 | 6.3 | 1 |
| | 1-3 | M-3 | A-3 | 100 | B-3 | 7.1 | CC-3 | 39.7 | A-3 | 100 | B-3 | 7.1 | C-3 | 35.7 | 1 |
| | | | | | | | | | | | | | C-8 | 4.0 | |
| | 1-4 | M-4 | A-4 | 100 | B-1 | 54.5 | CC-4 | 27.3 | A-4 | 100 | B-1 | 54.5 | C-4 | 27.3 | 1 |
| | 1-5 | M-5 | A-5 | 100 | B-1 | 13.5 | CC-5 | 21.0 | A-5 | 100 | B-1 | 13.5 | C-5 | 186 | 2 |
| | | | | | | | | | | | | | C-8 | 2.4 | |
| | 1-6 | M-6 | A-1 | 100 | B-1 | 13.3 | CC-6 | 25.0 | A-1 | 100 | B-1 | 13.3 | C-6 | 20.0 | 2 |
| | | | | | | | | | | | | | C-8 | 5.0 | |
| | 1-7 | M-7 | A-1 | 100 | B-1 | 14.3 | CC-7 | 35.8 | A-1 | 100 | B-1 | 14.3 | C-7 | 28.6 | 2 |
| Comparative Example | 1-1 | m-1 | A-1 | 100 | B-1 | 1.5 | CC-1 | 79.5 | A-1 | 100 | B-1 | 1.5 | C-1 | 63.6 | 3 |
| | 1-2 | m-2 | A-1 | 100 | b-1 | 11.1 | - | - | A-1 | 100 | b-1 | 11.1 | - | - | 1 |
| | 1-3 | m-3 | A-1 | 100 | b-2 | 77.8 | CC-1 | 55.5 | A-1 | 100 | b-2 | 77.8 | C-1 | 44.4 | 2 |
| | 1-4 | m-4 | A-1 | 100 | - | - | CC-1 | 31.3 | A-1 | 100 | - | - | C-1 | 25.0 | 3 |

### 3. Test Section 3 (production of polyolefin-based resin film)

Polyolefin-based resin films were obtained using the masterbatches shown in Table 2 and non-modified polyolefin resins.

### Example 2-1

5 parts of the masterbatch (M-1) obtained in Example 1-1 and 95 parts of the ethylene-1-butene copolymer (A-1) were mixed in a tumbler. Subsequently, the mixture was melted at 190°C by an inflation molding machine and extruded while being cooled in an environment at 20°C to produce a polyolefin-based resin film (F-1) having a thickness of 40 µm (see Table 3). Table 3 shows the configurations of the obtained films, that is, the content of the ethylene vinyl acetate copolymer (B) according to the present invention and a total content of the antifogging agent (C) according to the present invention based on 100 parts of a total amount of the non-modified polyolefin resin (A).

Then, a film-forming behavior of the polyolefin-based resin film was visually observed and the dimension thereof was measured, and the film-forming stability (film-forming property) was evaluated according to the following criteria. The results are shown in Table 3.

### <Criteria for determining film-forming property>

1: No extrusion variation occurred during film formation, and film thickness unevenness was ± 5 µm with respect to a set thickness (very excellent film-forming stability)
2: A slight extrusion variation occurred during film formation, but the film thickness unevenness was ± 5 µm with respect to the set thickness (excellent film-forming stability)
3: A slight extrusion variation occurred during the film formation, and the film thickness unevenness was in a range from +5 to +7 µm or from -5 to -7 µm with respect to the set thickness (excellent film-forming stability)
4: Streaks and film thickness unevenness due to extrusion variation occurred during film formation (poor film-forming stability)

The resulting polyolefin-based resin film was evaluated for antifogging property and transparency by the following methods. The results are shown in Table 3.

### (1) Antifogging property

The polyolefin-based resin film was placed under conditions of a temperature of 20°C and a relative humidity of 65% for 24 hours to adjust humidity, and then covered on an opening surface of a beaker containing water at 20°C. Subsequently, in this state, the film was placed in an atmosphere at 5°C for 24 hours, a degree of attachment of water droplets to the beaker-coating surface was observed, and the antifogging property was evaluated according to the following criteria.

### <Criteria for determining antifogging property>

1: No water droplet was attached, and the film was transparent (remarkably excellent antifogging property)
2: Large water droplets were attached, but the film was transparent (excellent antifogging property).
3: A large number of small water droplets were attached, and the film was opaque (poor antifogging property).

### (2) Transparency

The polyolefin-based resin film was placed under conditions of a temperature of 20°C and a relative humidity of 65% for 24 hours to adjust humidity. Then, a haze was measured using a haze meter "NDH-5000" (model name) manufactured by Nippon Denshoku Industries Co., Ltd., and transparency was evaluated according to the following criteria.

### <Criteria for determining transparency>

1: The haze was less than 5% (excellent transparency)
2: The haze was 5% or higher and lower than 10% (good transparency)
3: The haze was 10% or higher (poor transparency)

### Example 2-2

20 parts of the masterbatch (M-2) obtained in Example 1-2 and 80 parts of the ethylene-1-hexene copolymer (A-2) were mixed in a tumbler. Subsequently, the mixture was melted at 190°C by an inflation molding machine and extruded while being cooled in an environment at 20°C to produce a polyolefin-based resin film (F-2) having a thickness of 30 µm (see Table 3).

After that, the film was evaluated in the same manner as those in Example 2-1. The results are shown in Table 3.

### Example 2-3

8 parts of the masterbatch (M-3) obtained in Example 1-3 and 92 parts of the ethylene-1-octene copolymer (A-3) were mixed in a tumbler. Subsequently, the mixture was melted at 190°C by an inflation molding machine and extruded while being cooled in an environment at 20°C to produce a polyolefin-based resin film (F-3) having a thickness of 20 µm (see Table 3).

After that, the film was evaluated in the same manner as those in Example 2-1. The results are shown in Table 3.

### Example 2-4

30 parts of the masterbatch (M-4) obtained in Example 1-4 and 70 parts of the ethylene-1-hexene copolymer (A-4) were mixed in a tumbler. Subsequently, the mixture was melted at 190°C by an inflation molding machine and extruded while being cooled in an environment at 20°C to produce a polyolefin-based resin film (F-4) having a thickness of 10 µm (see Table 3).

After that, the film was evaluated in the same manner as those in Example 2-1. The results are shown in Table 3.

### Example 2-5

4 parts of the masterbatch (M-5) obtained in Example 1-5 and 96 parts of the ethylene-1-butene propylene copolymer (A-5) were mixed in a tumbler. Subsequently, the mixture was melted at 190°C by an inflation molding machine and extruded while being cooled in an environment at 20°C to produce a polyolefin-based resin film (F-5) having a thickness of 120 µm (see Table 3).

After that, the film was evaluated in the same manner as those in Example 2-1. The results are shown in Table 3.

### Example 2-6

7 parts of the masterbatch (M-6) obtained in Example 1-6 and 93 parts of the ethylene-1-butene copolymer (A-1) were mixed in a tumbler. Subsequently, the mixture was melted at 190°C by an inflation molding machine and extruded while being cooled in an environment at 20°C to produce a polyolefin-based resin film (F-6) having a thickness of 40 µm (see Table 3).

After that, the film was evaluated in the same manner as those in Example 2-1. The results are shown in Table 3.

### Example 2-7

5 parts of the masterbatch (M-7) obtained in Example 1-7 and 95 parts of the ethylene-1-butene copolymer (A-1) were mixed in a tumbler. Subsequently, the mixture was melted at 190°C by an inflation molding machine and extruded while being cooled in an environment at 20°C to produce a polyolefin-based resin film (F-7) having a thickness of 40 µm (see Table 3).

After that, the film was evaluated in the same manner as those in Example 2-1. The results are shown in Table 3.

### Comparative Example 2-1

5 parts of the masterbatch (m-1) obtained in Comparative Example 1-1 and 95 parts of the ethylene-1-butene copolymer (A-1) were mixed in a tumbler. Subsequently, the mixture was melted at 190°C by an inflation molding machine and extruded while being cooled in an environment at 20°C to produce a polyolefin-based resin film (f-1) having a thickness of 40 µm (see Table 3).

After that, the film was evaluated in the same manner as those in Example 2-1. The results are shown in Table 3.

### Comparative Example 2-2

5 parts of the masterbatch (m-2) obtained in Comparative Example 1-2 and 95 parts of the ethylene-1-butene copolymer (A-1) were mixed in a tumbler. Subsequently, the mixture was melted at 190°C by an inflation molding machine and extruded while being cooled in an environment at 20°C to produce a polyolefin-based resin film (f-2) having a thickness of 40 µm (see Table 3).

After that, the film was evaluated in the same manner as those in Example 2-1. The results are shown in Table 3.

### Comparative Example 2-3

5 parts of the masterbatch (m-3) obtained in Comparative Example 1-3 and 95 parts of the ethylene-1-butene copolymer (A-1) were mixed in a tumbler. Subsequently, the mixture was melted at 190°C by an inflation molding machine and extruded while being cooled in an environment at 20°C to produce a polyolefin-based resin film (f-3) having a thickness of 40 µm (see Table 3).

After that, the film was evaluated in the same manner as those in Example 2-1. The results are shown in Table 3.

### Comparative Example 2-4

5 parts of the masterbatch (m-4) obtained in Comparative Example 1-4 and 95 parts of the ethylene-1-butene copolymer (A-1) were mixed in a tumbler. Subsequently, the mixture was melted at 190°C by an inflation molding machine and extruded while being cooled in an environment at 20°C to produce a polyolefin-based resin film (f-4) having a thickness of 40 µm (see Table 3).

After that, the film was evaluated in the same manner as those in Example 2-1. The results are shown in Table 3.

**[Table 3]**

| | | Polyolefin-based resin film | | | | | | | | | Evaluation | | |
|---|---|---|---|---|---|---|---|---|---|---|---|---|---|
| | | Type | Raw material | | | | Main composition of film | | | Thickness (qm) | Film-forming property | Antifogging property | Transparency |
| | | | Masterbatch | | Non-modified polyolefin resin | | Non-modified polyolefin resin (A) | Ethylene vinyl acetate copolymer (B) | Antifogging agent (C) | | | | |
| | | | Type | Used (%) | Type | Used (%) | Content (parts) | Content (parts) | Content (parts) | | | | |
| Example | 2-1 | F-1 | M-1 | 5 | A-1 | 95 | 100 | 0.48 | 0.97 | 40 | 1 | 1 | 1 |
| | 2-2 | F-2 | M-2 | 20 | A-2 | 80 | 100 | 3.10 | 1.04 | 30 | 1 | 1 | 1 |
| | 2-3 | F-3 | M-3 | 8 | A-3 | 92 | 100 | 0.40 | 2.22 | 20 | 1 | 1 | 1 |
| | 2-4 | F-4 | M-4 | 30 | A-4 | 70 | 100 | 10.40 | 5,21 | 10 | 1 | 1 | 1 |
| | 2-5 | F-5 | M-5 | 4 | A-5 | 96 | 100 | 0.41 | 0.63 | 120 | 2 | 1 | 1 |
| | 2-6 | F-6 | M-6 | 7 | A-1 | 93 | 100 | 0.69 | 1.29 | 40 | 2 | 1 | 1 |
| | 2-7 | F-7 | M-7 | 5 | A-1 | 95 | 100 | 0.48 | 0.97 | 40 | 2 | 2 | 2 |
| Comparative Example | 2-1 | f-1 | m-1 | 5 | A-1 | 95 | 100 | 0.04 | 1.80 | 40 | 4 | 1 | 2 |
| | 2-2 | f-2 | m-2 | 5 | A-1 | 95 | 100 | 0.50 | 0 | 40 | 1 | 3 | 1 |
| | 2-3 | f-3 | m-3 | 5 | A-1 | 95 | 100 | 1.72 | 0.98 | 40 | 2 | 3 | 2 |
| | 2-4 | f-4 | m-4 | 3 | A-1 | 95 | 100 | 0 | 0.96 | 40 | 4 | 1 | 1 |

### 4. Test Section 4 (production of masterbatch containing antifogging agent and containing no ethylene vinyl acetate copolymer)

Hereinafter, production examples of a masterbatch which is a raw material for use in preparation of a polyolefin-based resin film containing an ethylene vinyl acetate copolymer and an antifogging agent (e.g., a masterbatch not containing an ethylene vinyl acetate copolymer and containing a non-modified polyolefin resin and an antifogging agent) will be described.

### Preparation Example 8

85 parts of the ethylene 1-butene copolymer (A-1) was brought into a molten state at 220°C by a twin-screw extruder, 12 parts of the antifogging agent (C-1) and 3 parts of the antifogging agent (D-1) were fed to the extruder including the molten mixture by liquid injection, and all the raw materials were melt-kneaded. Subsequently, the mixture was granulated to obtain a masterbatch (MM-1) having a configuration shown in Table 4.

### Preparation Example 9

85 parts of the ethylene 1-hexene copolymer (A-2) was brought into a molten state at 220°C by a twin-screw extruder, 12 parts of the antifogging agent (C-2) and 3 parts of the antifogging agent (D-1) were fed to the extruder including the molten mixture by liquid injection, and all the raw materials were melt-kneaded. Subsequently, the mixture was granulated to obtain a masterbatch (MM-2) (see Table 4).

### Preparation Example 10

80 parts of the ethylene 1-octene copolymer (A-3) was brought into a molten state at 220°C by a twin-screw extruder, 18 parts of the antifogging agent (C-3) and 2 parts of the antifogging agent (C-8) were fed to the extruder including the molten mixture by liquid injection, and all the raw materials were melt-kneaded. Subsequently, the mixture was granulated to obtain a masterbatch (MM-3) (see Table 4).

### Preparation Example 11

80 parts of the ethylene 1-hexene copolymer (A-4) and 20 parts of the antifogging agent (C-4) were mixed in a tumbler. All the raw materials were then melt-kneaded at 220°C by a twin-screw extruder. Subsequently, the mixture was granulated to obtain a masterbatch (MM-4) (see Table 4).

### Preparation Example 12

90 parts of the ethylene 1-butene propylene copolymer (A-5) was brought into a molten state at 220°C by a twin-screw extruder, 9 parts of the antifogging agent (C-5) and 1 part of the antifogging agent (C-8) were fed to the extruder including the molten mixture by liquid injection, and all the raw materials were melt-kneaded. Subsequently, the mixture was granulated to obtain a masterbatch (MM-5) (see Table 4).

### Preparation Example 13

90 parts of the ethylene 1-butene copolymer (A-1) was brought into a molten state at 220°C by a twin-screw extruder, 8 parts of the antifogging agent (C-6) and 2 parts of the antifogging agent (C-8) were fed to the extruder including the molten mixture by liquid injection, and all the raw materials were melt-kneaded. Subsequently, the mixture was granulated to obtain a masterbatch (MM-6) (see Table 4).

**[Table 4]**

| | Masterbatch | | | | | | |
|---|---|---|---|---|---|---|---|
| | Type | Raw material | | | | Configuration | |
| | | Non-modified polyolefin resin | | Antifogging agent | | Non-modified polyolefin resin (A) | Antifogging agent (C) |
| | | Type | Used (parts) | Type | Used (parts) | Content (parts) | Content (parts) |
| Preparation Example 8 | MM-1 | A-1 | 85 | C-1 | 12 | 100 | 14.1 |
| Preparation Example 9 | MM-2 | A-2 | 85 | C-2 | 12 | 100 | 14.1 |
| Preparation Example 10 | MM-3 | A-3 | 80 | C-3 | 18 | 100 | 25.0 |
| | | | | C-8 | 2 | | |
| Preparation Example 11 | MM-4 | A-4 | 80 | C-4 | 20 | 100 | 25.0 |
| Preparation Example 12 | MM-5 | A-5 | 90 | C-5 | 9 | 100 | 11.1 |
| | | | | C-8 | 1 | | |
| Preparation Example 13 | MM-6 | A-1 | 90 | C-6 | 8 | 100 | 11.1 |
| | | | | C-8 | 2 | | |

### 5. Test Section 5 (production of polyolefin-based resin film)

Polyolefin-based resin films were obtained using the masterbatches shown in Table 4, a non-modified polyolefin resin, and an ethylene vinyl acetate copolymer.

### Example 3-1

4 parts of the masterbatch (MM-1) obtained in Preparation Example 8, 92.8 parts of the ethylene 1-butene copolymer (A-1), and 3.2 parts of the ethylene vinyl acetate copolymer (B-1) were mixed in a tumbler. Subsequently, the mixture was melted at 190°C by an inflation molding machine and extruded while being cooled in an environment at 20°C to produce a polyolefin-based resin film (FF-1) having a thickness of 40 µm and having a configuration shown in Table 5.

### Example 3-2

5 parts of the masterbatch (MM-2) obtained in Preparation Example 9, 79.4 parts of the ethylene 1-hexene copolymer (A-2), and 15.6 parts of the ethylene vinyl acetate copolymer (B-2) were mixed in a tumbler. Subsequently, the mixture was melted at 190°C by an inflation molding machine and extruded while being cooled in an environment at 20°C to produce a polyolefin-based resin film (FF-2) having a thickness of 30 µm (see Table 5).

After that, the film-forming property, antifogging property, and transparency were evaluated in the same manner as described above. The results are also shown in Table 5.

### Example 3-3

11 parts of the masterbatch (MM-3) obtained in Preparation Example 10, 88.6 parts of the ethylene 1-octene copolymer (A-3), and 0.4 part of the ethylene vinyl acetate copolymer (B-3) were mixed in a tumbler. Subsequently, the mixture was melted at 190°C by an inflation molding machine and extruded while being cooled in an environment at 20°C to produce a polyolefin-based resin film (FF-3) having a thickness of 20 µm (see Table 5).

After that, the film-forming property, antifogging property, and transparency were evaluated in the same manner as described above. The results are also shown in Table 5.

### Example 3-4

36 parts of the masterbatch (MM-4) obtained in Preparation Example 11, 37 parts of the ethylene 1-hexene copolymer (A-4), and 27 parts of the ethylene vinyl acetate copolymer (B-1) were mixed in a tumbler. Subsequently, the mixture was melted at 190°C by an inflation molding machine and extruded while being cooled in an environment at 20°C to produce a polyolefin-based resin film (FF-4) having a thickness of 10 µm (see Table 5).

After that, the film-forming property, antifogging property, and transparency were evaluated in the same manner as described above. The results are also shown in Table 5.

### Example 3-5

3 parts of the masterbatch (MM-5) obtained in Preparation Example 12, 94 parts of the ethylene 1-butene propylene copolymer (A-5), and 3 parts of the ethylene vinyl acetate copolymer (B-1) were mixed in a tumbler. Subsequently, the mixture was melted at 190°C by an inflation molding machine and extruded while being cooled in an environment at 20°C to produce a polyolefin-based resin film (FF-5) having a thickness of 120 µm (see Table 5).

After that, the film-forming property, antifogging property, and transparency were evaluated in the same manner as described above. The results are also shown in Table 5.

### Example 3-6

5 parts of the masterbatch (MM-6) obtained in Preparation Example 12, 92 parts of the ethylene 1-butene copolymer (A-1), and 3 parts of the ethylene vinyl acetate copolymer (B-1) were mixed in a tumbler. Subsequently, the mixture was melted at 190°C by an inflation molding machine and extruded while being cooled in an environment at 20°C to produce a polyolefin-based resin film (FF-7) having a thickness of 40 µm (see Table 5).

After that, the film-forming property, antifogging property, and transparency were evaluated in the same manner as described above. The results are also shown in Table 5.

### Comparative Example 3-1

57 parts of the masterbatch (MM-3) obtained in Preparation Example 10, 37.5 parts of the ethylene 1-butene copolymer (A-1), and 5.5 parts of the ethylene vinyl acetate copolymer (B-1) were mixed in a tumbler. Subsequently, the mixture was melted at 190°C by an inflation molding machine and extruded while being cooled in an environment at 20°C to produce a polyolefin-based resin film (ff-1) having a thickness of 40 µm (see Table 5).

After that, the film-forming property, antifogging property, and transparency were evaluated in the same manner as described above. The results are also shown in Table 5.

### Comparative Example 3-2

1 part of the masterbatch (MM-1) obtained in Preparation Example 8, 93 parts of the ethylene 1-butene copolymer (A-1), and 6 parts of the ethylene vinyl acetate copolymer (b-1) were mixed in a tumbler. Subsequently, the mixture was melted at 190°C by an inflation molding machine and extruded while being cooled in an environment at 20°C to produce a polyolefin-based resin film (ff-2) having a thickness of 40 µm (see Table 5).

After that, the film-forming property, antifogging property, and transparency were evaluated in the same manner as described above. The results are also shown in Table 5.

### Comparative Example 3-3

4 parts of the masterbatch (MM-1) obtained in Preparation Example 8, 54 parts of the ethylene 1-butene copolymer (A-1), and 42 parts of the ethylene vinyl acetate copolymer (b-2) were mixed in a tumbler. Subsequently, the mixture was melted at 190°C by an inflation molding machine and extruded while being cooled in an environment at 20°C to produce a polyolefin-based resin film (ff-3) having a thickness of 40 µm (see Table 5).

After that, the film-forming property, antifogging property, and transparency were evaluated in the same manner as described above. The results are also shown in Table 5.

### Comparative Example 3-4

3.5 parts of the masterbatch (MM-1) obtained in Preparation Example 8, 96.35 parts of the ethylene 1-butene copolymer (A-1), and 0.15 part of the ethylene vinyl acetate copolymer (B-1) were mixed in a tumbler. Subsequently, the mixture was melted at 190°C by an inflation molding machine and extruded while being cooled in an environment at 20°C to produce a polyolefin-based resin film (ff-4) containing no ethylene vinyl acetate copolymers and having a thickness of 40 µm (see Table 5).

After that, the film-forming property, antifogging property, and transparency were evaluated in the same manner as described above. The results are also shown in Table 5.

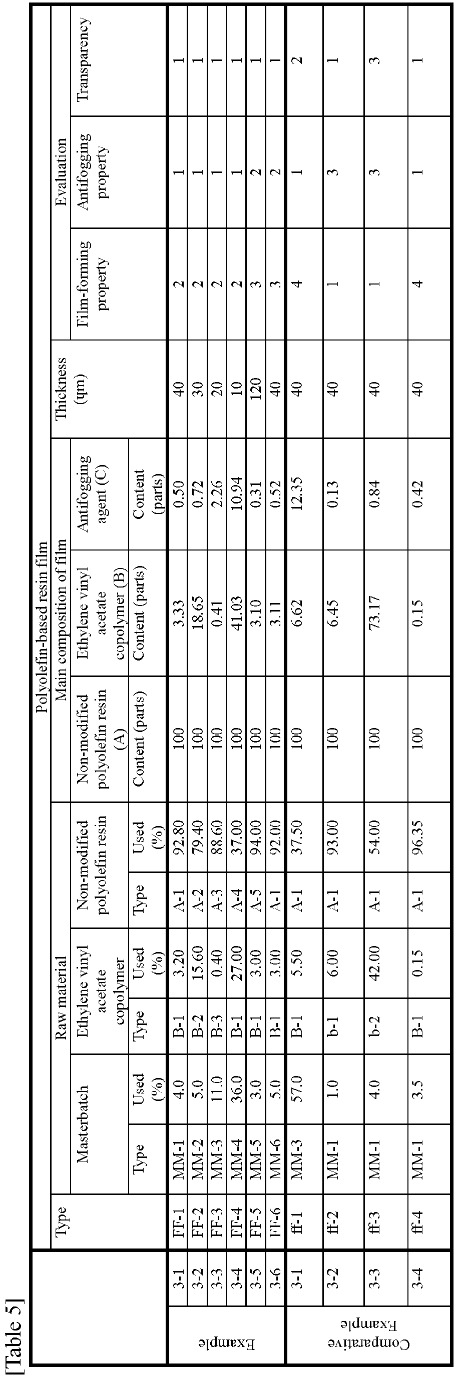

As is apparent from Table 5, the polyolefin-based resin films (FF-1) to (FF-6) according to Examples 3-1 to 3-6 in which the ethylene vinyl acetate copolymer (B) and the antifogging agent (C) according to the present invention are contained at specific content ratios with respect to the non-modified polyolefin resin (A) were excellent in antifogging property and transparency.

### 6. Test Section 6 (production of laminated film)

Laminated films having a three-layer structure including a first resin layer containing a non-modified polyolefin resin, an antifogging agent, and an ethylene vinyl acetate copolymer, a second resin layer (intermediate layer), and a third resin layer in this order were obtained using the masterbatches shown in Table 2, and a non-modified polyolefin resin.

### Example 4-1

As a molding material for the first resin layer, a mixture obtained by mixing 15 parts of the masterbatch (M-1) and 85 parts of the ethylene 1-butene copolymer (A-1) using a tumbler was used. As a molding material for each of the second resin layer (intermediate layer) and the third resin layer, only the ethylene 1-butene copolymer (A-1) was used (see Table 6).

Using all of these molding materials, the mixture was melted at 190°C by an inflation molding machine, and co-extruded in an environment of 20°C to produce a laminated film (G-1) having a total thickness of 40 µm in which the first resin layer, the second resin layer (intermediate layer), and the third resin layer had the configurations shown in Table 7, and the thicknesses of the respective resin layers were 10 µm, 20 µm, and 10 µm (see Table 7).

The film-forming property of the produced laminated film was evaluated by the method described in the Test Section 3. In addition, the antifogging property and transparency were evaluated. The evaluation results are also shown in Table 7.

### (1) Antifogging property

The laminated film was placed under conditions of a temperature of 20°C and a relative humidity of 65% for 24 hours to adjust humidity, and then the first resin layer surface was covered on an opening surface of a beaker containing water at 20°C. Subsequently, in this state, the film was placed in an atmosphere at 5°C for 24 hours, a degree of attachment of water droplets to the beaker-coating surface (first resin layer surface) was observed, and the antifogging property was evaluated according to the following criteria.

### <Criteria for determining antifogging property>

1: No water droplet was attached, and the film was transparent (remarkably excellent antifogging property)
2: Large water droplets were attached, but the film was transparent (excellent antifogging property).
3: A large number of small water droplets were attached, and the film was opaque (poor antifogging property).

### (2) Transparency

The laminated film was placed under conditions of a temperature of 20°C and a relative humidity of 65% for 24 hours to adjust humidity. Then, a haze was measured using a haze meter "NDH-5000" (model name) manufactured by Nippon Denshoku Industries Co., Ltd., and transparency was evaluated according to the following criteria.

### <Criteria for determining transparency>

1: The haze was less than 10% (excellent transparency)
2: The haze was 10% or higher and lower than 15% (good transparency)
3: The haze was 15% or higher (poor transparency)

### Example 4-2

A laminated film (G-2) having thicknesses of a first resin layer, a second resin layer (intermediate resin layer), and a third resin layer of 10 µm, 20 µm, and 10 µm, respectively, was obtained in the same manner as those in Example 4-1 except that a mixture obtained by mixing 40 parts of the masterbatch (M-2), and 60 parts of the ethylene 1-hexene copolymer (A-2) using a tumbler was used as a molding material for the first resin layer; and only the ethylene 1-hexene copolymer (A-2) was used as a molding material for each of the second resin layer (intermediate layer) and the third resin layer (see Tables 6 and 7). After that, the film-forming property, antifogging property, and transparency were evaluated. The results are also shown in Table 6.

### Example 4-3

A laminated film (G-3) having thicknesses of a first resin layer, a second resin layer (intermediate layer), and a third resin layer of 20 µm, 20 µm, and 20 µm, respectively, was obtained in the same manner as those in Example 4-1 except that a mixture obtained by mixing 8 parts of the masterbatch (M-3), and 92 parts of the ethylene 1-octene copolymer (A-3) using a tumbler was used as a molding material for the first resin layer; a mixture obtained by mixing 10 parts of the masterbatch (M-3), and 90 parts of the ethylene 1-octene copolymer (A-3) using a tumbler was used as a molding material for the second resin layer (intermediate layer); and only the ethylene 1-octene copolymer (A-3) was used as a molding material for the third resin layer (see Tables 6 and 7). After that, the film-forming property, antifogging property, and transparency were evaluated. The results are also shown in Table 7.

### Example 4-4

A laminated film (G-4) having thicknesses of a first resin layer, a second resin layer (intermediate layer), and a third resin layer of 20 µm, 20 µm, and 20 µm, respectively, was obtained in the same manner as those in Example 4-1 except that a mixture obtained by mixing 15 parts of the masterbatch (M-4), and 85 parts of the ethylene 1-hexene copolymer (A-4) using a tumbler was used as a molding material for the first resin layer; the ethylene 1-butene propylene copolymer (A-5) and the ethylene 1-hexene copolymer (A-4) were respectively used as molding materials for the second resin layer (intermediate layer) and the third resin layer (see Tables 6 and 7). After that, the film-forming property, antifogging property, and transparency were evaluated. The results are also shown in Table 7.

### Example 4-5

A laminated film (G-5) having thicknesses of a first resin layer, a second resin layer (intermediate layer), and a third resin layer of 20 µm, 70 µm, and 30 µm, respectively, was obtained in the same manner as those in Example 4-1 except that a mixture obtained by mixing 15 parts of the masterbatch (M-5), and 85 parts of the ethylene 1-butene propylene copolymer (A-3) using a tumbler was used as a molding material for the first resin layer; a mixture obtained by mixing 5 parts of the masterbatch (M-5), and 95 parts of the ethylene 1-butene propylene copolymer (A-5) using a tumbler was used as a molding material for the second resin layer (intermediate layer); and only the ethylene 1-butene propylene copolymer (A-5) was used as a molding material for the third resin layer (see Tables 6 and 7). After that, the film-forming property, antifogging property, and transparency were evaluated. The results are also shown in Table 7.

### Example 4-6

A laminated film (G-6) having thicknesses of a first resin layer, a second resin layer (intermediate layer), and a third resin layer of 10 µm, 20 µm, and 30 µm, respectively, was obtained in the same manner as those in Example 4-1 except that a mixture obtained by mixing 20 parts of the masterbatch (M-6), and 80 parts of the ethylene 1-butene copolymer (A-1) using a tumbler was used as a molding material for the first resin layer; a mixture obtained by mixing 15 parts of the masterbatch (M-6), and 85 parts of the ethylene 1-butene copolymer (A-1) using a tumbler was used as a molding material for the second resin layer (intermediate layer); and only the ethylene 1-butene copolymer (A-1) was used as a molding material for the third resin layer (see Tables 6 and 7). After that, the film-forming property, antifogging property, and transparency were evaluated. The results are also shown in Table 7.

### Example 4-7

A laminated film (G-7) having thicknesses of a first resin layer, a second resin layer (intermediate resin layer), and a third resin layer of 10 µm, 20 µm, and 10 µm, respectively, was obtained in the same manner as those in Example 4-1 except that a mixture obtained by mixing 15 parts of the masterbatch (M-7), and 85 parts of the ethylene 1-butene copolymer (A-1) using a tumbler was used as a molding material for the first resin layer; and only the ethylene 1-butene copolymer (A-1) was used as a molding material for each of the second resin layer (intermediate layer) and the third resin layer (see Tables 6 and 7). After that, the film-forming property, antifogging property, and transparency were evaluated. The results are also shown in Table 7.

### Comparative Example 4-1

A laminated film (g-1) having thicknesses of a first resin layer, a second resin layer (intermediate resin layer), and a third resin layer of 10 µm, 20 µm, and 10 µm, respectively, was obtained in the same manner as those in Example 4-1 except that a mixture obtained by mixing 35 parts of the masterbatch (m-1), and 65 parts of the ethylene 1-butene copolymer (A-1) using a tumbler was used as a molding material for the first resin layer; and only the ethylene 1-butene copolymer (A-1) was used as a molding material for each of the second resin layer (intermediate layer) and the third resin layer (see Tables 6 and 7). After that, the film-forming property, antifogging property, and transparency were evaluated. The results are also shown in Table 7.

### Comparative Example 4-2

A laminated film (g-2) having thicknesses of a first resin layer, a second resin layer (intermediate resin layer), and a third resin layer of 10 µm, 20 µm, and 10 µm, respectively, was obtained in the same manner as those in Example 4-1 except that a mixture obtained by mixing 15 parts of the masterbatch (m-2), and 85 parts of the ethylene 1-butene copolymer (A-1) using a tumbler was used as a molding material for the first resin layer; and only the ethylene 1-butene copolymer (A-1) was used as a molding material for each of the second resin layer (intermediate layer) and the third resin layer (see Tables 6 and 7). After that, the film-forming property, antifogging property, and transparency were evaluated. The results are also shown in Table 7.

### Comparative Example 4-3

A laminated film (g-3) having thicknesses of a first resin layer, a second resin layer (intermediate resin layer), and a third resin layer of 10 µm, 20 µm, and 10 µm, respectively, was obtained in the same manner as those in Example 4-1 except that a mixture obtained by mixing 0.4 part of the masterbatch (m-3), and 99.6 parts of the ethylene 1-butene copolymer (A-1) using a tumbler was used as a molding material for the first resin layer; and only the ethylene 1-butene copolymer (A-1) was used as a molding material for each of the second resin layer (intermediate layer) and the third resin layer (see Tables 6 and 7). After that, the film-forming property, antifogging property, and transparency were evaluated. The results are also shown in Table 7.

### Comparative Example 4-4

A laminated film (g-4) having thicknesses of a first resin layer, a second resin layer (intermediate resin layer), and a third resin layer of 10 µm, 20 µm, and 10 µm, respectively, was obtained in the same manner as those in Example 4-1 except that a mixture obtained by mixing 15 parts of the masterbatch (m-4), and 85 parts of the ethylene 1-butene copolymer (A-1) using a tumbler was used as a molding material for the first resin layer; and only the ethylene 1-butene copolymer (A-1) was used as a molding material for each of the second resin layer (intermediate layer) and the third resin layer (see Tables 6 and 7). After that, the film-forming property, antifogging property, and transparency were evaluated. The results are also shown in Table 7.

**[Table 6]**

| | | Laminated film | | | | | | | | | | |
|---|---|---|---|---|---|---|---|---|---|---|---|---|
| | | Type | First resin layer | | | | Second resin layer (intermediate layer) | | | | Third resin layer | |
| | | | Raw material | | | | Raw material | | | | Raw material | |
| | | | Masterbatch | | Non-modified polyolefin resin | | Masterbatch | | Non-modified polyolefin resin | | Non-modified polyolefin resin | |
| | | | Type | Used (%) | Type | Used (%) | Type | Used (%) | Type | Used (%) | Type | Used (%) |
| Example | 4-1 | G-1 | M-1 | 15 | A-1 | 85 | - | - | A-1 | 100 | A-1 | 100 |
| | 4-2 | G-2 | M-2 | 40 | A-2 | 60 | - | - | A-2 | 100 | A-2 | 100 |
| | 4-3 | G-3 | M-3 | 8 | A-3 | 92 | M-3 | 10 | A-3 | 90 | A-3 | 100 |
| | 4-4 | G-4 | M-4 | 15 | A-4 | 85 | - | - | A-5 | 100 | A-4 | 100 |
| | 4-5 | G-5 | M-5 | 15 | A-5 | 85 | M-5 | 5 | A-5 | 95 | A-5 | 100 |
| | 4-6 | G-6 | M-6 | 20 | A-1 | 80 | M-6 | 15 | A-1 | 85 | A-1 | 100 |
| | 4-7 | G-7 | M-7 | 15 | A-1 | 85 | - | - | A-1 | 100 | A-1 | 100 |
| Comparative Example | 4-1 | g-1 | m-1 | 35 | A-1 | 65 | - | - | A-1 | 100 | A-1 | 100 |
| | 4-2 | g-2 | m-2 | 15 | A-1 | 85 | - | - | A-1 | 100 | A-1 | 100 |
| | 4-3 | g-3 | m-3 | 0.4 | A-1 | 99.6 | - | - | A-1 | 100 | A-1 | 100 |
| | 4-4 | g-4 | m-4 | 15 | A-1 | 85 | - | - | A-1 | 100 | A-1 | 100 |

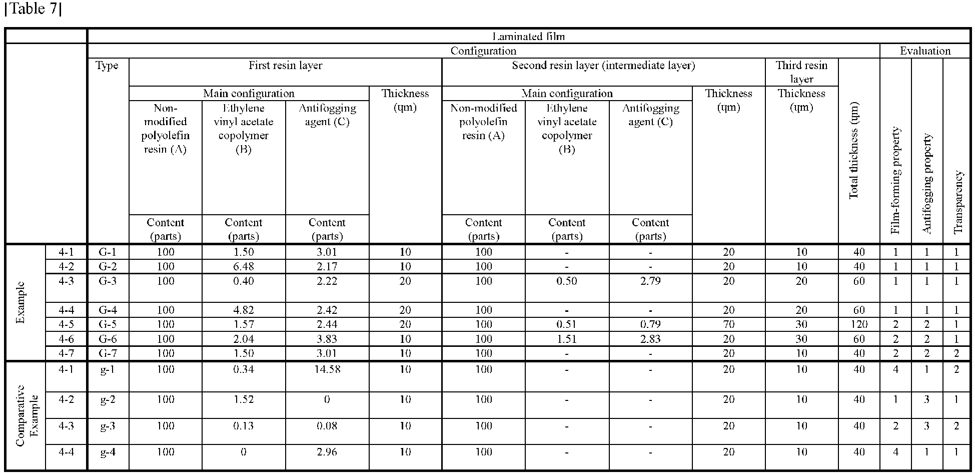

As is apparent from Table 7, the laminated films (G-1) to (G-7) having the first resin layer composed of the polyolefin-based resin film of the present invention excellent in antifogging property and transparency were excellent in antifogging property and transparency.

### INDUSTRIAL APPLICABILITY

When the resin composition containing the masterbatch of the present invention is used, a polyolefin-based resin film excellent in antifogging property and transparency can be efficiently produced. Since the polyolefin-based resin film and the laminated film of the present invention are excellent in antifogging property and transparency, and therefore these films are suitable for packaging materials for foods and the like.

## Claims

1. A masterbatch comprising a non-modified polyolefin resin, an ethylene vinyl acetate copolymer, and an antifogging agent, **characterized in that** a content of a structural unit derived from vinyl acetate constituting the ethylene vinyl acetate copolymer is in a range from 5% to 30% by mol, that the antifogging agent is a fatty acid ester formed from a fatty acid and a polyhydric alcohol, and that a content of the ethylene vinyl acetate copolymer is in a range from 7 to 75 parts by mass based on 100 parts by mass of the non-modified polyolefin resin.

2. The masterbatch according to Claim 1, wherein a hydrocarbon group in the fatty acid has 8 to 22 carbon atoms.

3. The masterbatch according to Claim 1 or 2, wherein the polyhydric alcohol is propyleneglycol, glycerin, or a glycerin condensate.

4. The masterbatch according to any one of Claims 1 to 3, wherein a content of the antifogging agent is in a range from 6 to 60 parts by mass based on 100 parts by mass of the non-modified polyolefin resin.

5. A resin composition **characterized by** comprising the masterbatch according to any one of Claims 1 to 4.

6. A method of producing a polyolefin-based resin film **characterized by** subjecting the resin composition according to Claim 5 to a film molding.

7. A polyolefin-based resin film comprising a non-modified polyolefin resin, an ethylene vinyl acetate copolymer, and an antifogging agent, **characterized in that** a content of a structural unit derived from vinyl acetate constituting the ethylene vinyl acetate copolymer is in a range from 5% to 30% by mol, that the antifogging agent is a fatty acid ester formed from a fatty acid and a polyhydric alcohol, that a content of the ethylene vinyl acetate copolymer is in a range from 0.20 to 67.00 parts by mass based on 100 parts by mass of the non-modified polyolefin resin, and that a content of the antifogging agent is in a range from 0.20 to 12.00 parts by mass based on 100 parts by mass of the non-modified polyolefin resin.

8. A laminated film **characterized by** laminating a resin layer consisting of the polyolefin-based resin film according to Claim 7 and other layers.
